(19)

Europäisches
Patentamt
European
Patent Office
Office européen
des brevets

(11)  **EP 4 672 540 A1**

(12)  **EUROPEAN PATENT APPLICATION**
published in accordance with Art. 153(4) EPC

(43) Date of publication:
**31.12.2025  Bulletin 2026/01**

(21) Application number: **24780367.9**

(22) Date of filing: **26.03.2024**

(51) International Patent Classification (IPC):
*H02J 3/38* (2006.01)     *H02J 3/14* (2006.01)
*H02S 50/00* (2014.01)

(52) Cooperative Patent Classification (CPC):
**H02J 3/14; H02J 3/38; H02J 13/00; H02S 50/00**

(86) International application number:
**PCT/JP2024/012067**

(87) International publication number:
**WO 2024/204259 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **31.03.2023  JP 2023059130**

(71) Applicants:
• **DAIKIN INDUSTRIES, LTD.**
  **Osaka-Shi, Osaka 530-0001 (JP)**
• **THE UNIVERSITY OF TOKYO**
  **Tokyo 1138654 (JP)**

(72) Inventors:
• **HIBINO, Hiroshi**
  **Osaka-shi, Osaka 530-0001 (JP)**
• **YASUDA, Yoshiki**
  **Osaka-shi, Osaka 530-0001 (JP)**
• **YAMAGIWA, Akio**
  **Osaka-shi, Osaka 530-0001 (JP)**
• **FUJIMOTO, Hiroshi**
  **Tokyo 113-8654 (JP)**
• **FUJITA, Toshiyuki**
  **Tokyo 113-8654 (JP)**
• **NAGAI, Sakahisa**
  **Tokyo 113-8654 (JP)**

(74) Representative: **Goddar, Heinz J.**
  **Boehmert & Boehmert**
  **Anwaltspartnerschaft mbB**
  **Pettenkoferstrasse 22**
  **80336 München (DE)**

(54)  **ELECTRIC DEVICE AND POWER SYSTEM COMPRISING ELECTRIC DEVICE**

(57)      An electric device (30) is configured to operate
with DC power or AC power supplied from a power
converter (12) that can convert power generated by a
solar cell (11) into DC power or AC power. The electric
device (30) comprises a power detection means (36) that
directly detects power generated by the solar cell (11),
DC power obtained by converting the power generated
by the solar cell (11), and AC power obtained by convert-
ing the power generated by the solar cell (11).

Fig.2

**EP 4 672 540 A1**

**Description**

TECHNICAL FIELD

The present disclosure relates to an electric device and a power system including an electric device.

BACKGROUND ART

A prior art discloses an electric device configured to adjust consumption power and performance of the electric device in accordance with power generated by a photovoltaic cell. Patent Literature 1 discloses a device controller that differs from an electric device. The device controller switches the power source of the electric device between direct-current power and alternating-current power based on the photovoltaic cell and consumption power of other electric devices.

CITATION LIST

Patent Literature

Patent Literature 1: JP2018-78713A

SUMMARY OF INVENTION

Technical Problem

Patent Literature 1 discloses that the electric device receives information related to output of the photovoltaic cell from the controller, which differs from the electric device. This delays transmission of the information related to the output of the photovoltaic cell to the electric device from the controller. Also, for example, the controller calculates an amount of power generated by the photovoltaic cell and transmits the amount to the electric device. Thus, information related to the amount of power generated by the photovoltaic cell may be deficiently transmitted to the electric device. As a result, the electric device may fail to obtain the correct amount of power generated by the photovoltaic cell.

Solution to Problem

To solve the above problem, a first aspect of an electric device is configured to be powered by direct-current power or alternating-current power supplied from a power converter. The power converter is configured to convert generation power of a photovoltaic cell into direct-current power or alternating-current power. The electric device includes a power detection means directly detecting the generation power of the photovoltaic cell, or direct-current power or alternating-current power that is converted from the generation power of the photovoltaic cell.

With this structure, the electric device includes the power detection means directly detecting generation power of the photovoltaic cell, direct-current power converted from the generation power of the photovoltaic cell, or alternating-current power converted from generation power of the photovoltaic cell. Thus, the electric device appropriately recognizes the generation power of the photovoltaic cell.

In the electric device according to the first aspect, a second aspect of the electric device is powered by receiving direct-current power converted from the generation power of the photovoltaic cell.

With this structure, the electric device configured to be powered by direct-current power appropriately recognizes the generation power of the photovoltaic cell.

In the electric device according to the first or second aspect, a third aspect of the electric device is powered by receiving a portion of first direct-current power supplied from the power converter or direct-current power obtained by adding the first direct-current power and second direct-current power that is supplied from a direct-current power source.

With this structure, generation power of the photovoltaic cell is appropriately recognized by the electric device configured to be powered by receiving a portion of first direct-current power, or direct-current power obtained by adding the first direct-current power and second direct-current power that is supplied from a direct-current power source.

In the electric device according to the first aspect, a fourth aspect of the electric device is powered by receiving a portion of first alternating-current power supplied from the power converter or alternating-current power obtained by adding the first alternating-current power and second alternating-current power that is supplied from an alternating-current power source.

With this structure, generation power of the photovoltaic cell is appropriately recognized by the electric device configured to be powered by receiving a portion of first alternating-current power, or alternating-current power obtained by adding the first alternating-current power and second alternating-current power that is supplied from an alternating-current power source.

In the electric device according to the first to fourth aspects, a fifth aspect of the electric device further includes a signal receiver that receives a detection signal of the generation power of the photovoltaic cell or a detection signal of direct-current power or alternating-current power converted from the generation power of the photovoltaic cell.

With this structure, the electric device uses the signal receiver to appropriately recognize generation power of the photovoltaic cell, or direct-current power or alternating-current power converted from the generation power of the photovoltaic cell.

In the electric device according to the first aspect, a sixth aspect of the electric device adjusts consumption power of the electric device based on a variation in the generation power of the photovoltaic cell.

With this structure, the electric device changes consumption power of the electric device in accordance with variations in generation power of the photovoltaic cell.

In the electric device according to the sixth aspect, a seventh aspect of the electric device adjusts consumption power of the electric device so as to decrease a difference between a variation amount of the generation power of the photovoltaic cell and a variation amount of the consumption power of the electric device.

With this structure, the electric device decreases the difference between generation power of the photovoltaic cell and consumption power of the electric device, thereby decreasing variations in power in the power path of the photovoltaic cell at the downstream side of the electric device.

In the electric device according to the first to seventh aspects, an eighth aspect of the electric device includes a heat pump device including a heat pump.

With this structure, the heat pump device appropriately recognizes generation power of the photovoltaic cell.

In the electric device according to the eighth aspect, in a ninth aspect of the electric device, the heat pump device includes an air conditioner adjusting a temperature of a room in a building on which the photovoltaic cell is installed. The air conditioner includes a temperature detection means detecting a temperature outside the building. The air conditioner adjusts an air conditioning performance based on a detection value of the power detection means and a detection value of the temperature detection means.

With this structure, the air conditioner appropriately adjusts the air conditioning performance in accordance with the amount of power generated by photovoltaics and the temperature outside the building.

In the electric device according to the ninth aspect, in a tenth aspect of the electric device, the air conditioner includes an insolation estimator estimating an insolation amount based on the detection value of the power detection means and the detection value of the temperature detection means. The air conditioner adjusts an air conditioning performance of the air conditioner in accordance with an output of the insolation estimator.

With this structure, the air conditioner appropriately adjusts the air conditioning performance of the air conditioner in accordance with the insolation amount.

An eleventh aspect of a power system includes the electric device according to any one of the first to tenth aspects, and a power converter configured to convert generation power of a photovoltaic cell into direct-current power or alternating-current power and supply the direct-current power or the alternating-current power to the electric device.

With this structure, the power system appropriately recognizes generation power of the photovoltaic cell.

In the power system according to the eleventh aspect, a twelfth aspect of the power system includes a power sensor arranged between the photovoltaic cell and the power converter, arranged in the power converter, or arranged downstream of the power converter with respect to power supply. The power system further includes a signal line connecting the power sensor and the electric device and transmitting a detection signal of the power sensor to the electric device.

With this structure, the power system appropriately recognizes generation power of the photovoltaic cell using the power sensor and the signal line.

BRIEF DESCRIPTION OF DRAWINGS

Fig. 1 is a schematic diagram of a building on which an embodiment of a power system is installed.
Fig. 2 is a block diagram showing the electrical configuration of the power system shown in Fig. 1.
Fig. 3 is a graph showing characteristics of a photovoltaic cell.
Fig. 4 is a block diagram showing the configuration of an insolation estimator of a controller shown in Fig. 2.
Fig. 5 is a graph showing examples of changes in power of the power system with adjustment of a variation amount of consumption power.
Fig. 6 is a block diagram showing the electrical configuration of a first modified example of a power system.
Fig. 7 is a block diagram showing the electrical configuration of a second modified example of a power system.

Fig. 8 is a block diagram showing the electrical configuration of a third modified example of a power system.
Fig. 9 is a block diagram showing the electrical configuration of a fourth modified example of a power system.

DESCRIPTION OF EMBODIMENTS

Power System

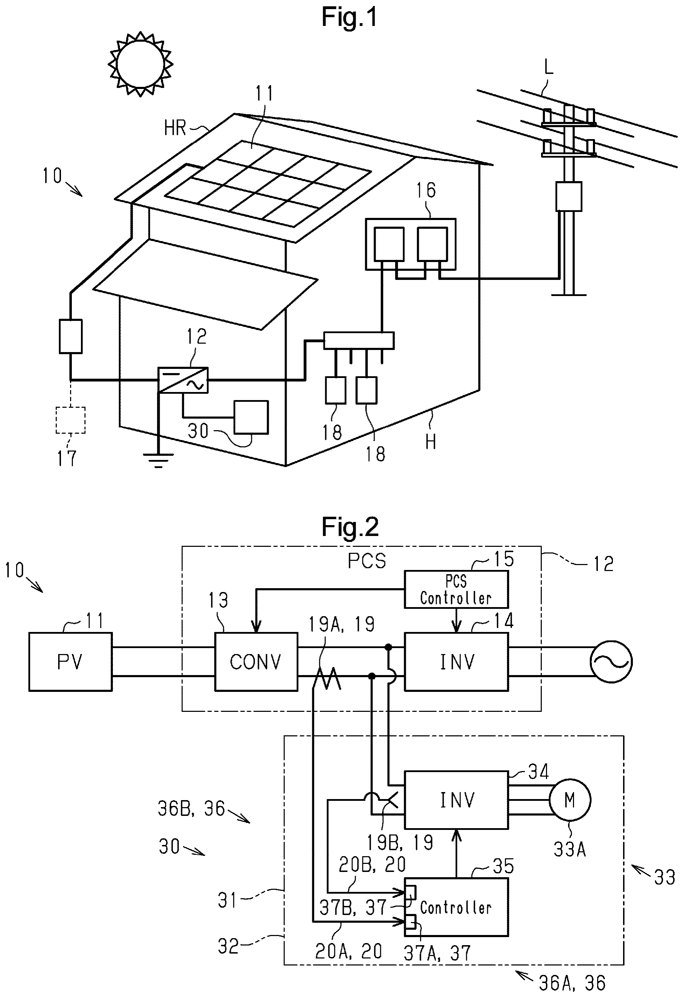

An embodiment of a power system 10 will now be described with reference to Figs. 1 to 5.

As shown in Fig. 1, the power system 10 is a system that supplies power using photovoltaics (PV). The power system 10 is configured to supply direct-current power generated by a photovoltaic cell 11 to an electric device 30. The power system 10 is installed on a building H, which is, for example, a house. The photovoltaic cell 11 is installed on, for example, a roof HR of the building H.

As shown in Figs. 1 and 2, the power system 10 includes a power conditioning system 12 (PCS) and the electric device 30. The PCS 12 is configured to convert generation power of the photovoltaic cell 11 into direct-current power or alternating-current power. The PCS 12 includes a DC/DC converter 13 and an inverter 14. The generation power of the photovoltaic cell 11 is voltage-converted by the DC/DC converter 13 and then is converted into alternating-current power by the inverter 14. In other words, the DC/DC converter 13 includes a first power converter configured to convert generation power of the photovoltaic cell 11 into direct-current power having a predetermined voltage value. In other words, the PCS 12 includes a second power converter configured to convert generation power of the photovoltaic cell 11 into alternating-current power having a predetermined voltage amplitude and a predetermined frequency. The first power converter includes, for example, the DC/DC converter 13 and a first controller controlling the DC/DC converter 13. The second power converter includes, for example, the DC/DC converter 13, the inverter 14, and a first controller controlling the DC/DC converter 13 and the inverter 14.

Power that is converted into alternating-current power by the inverter 14 is, for example, transmitted to a distribution line L arranged outside the building H. The distribution line L is, for example, a power system of an electric power company. The distribution line L is, for example, configured to transmit alternating-current power from an external alternating-current power source. The PCS 12 includes the PCS controller 15. The PCS controller 15 includes, for example, a microcomputer and memory storing a program operating the microcomputer. The PCS controller 15 may be configured as circuitry including (1) one or more processors that execute various processes according to computer programs (software), (2) one or more dedicated hardware circuits such as application-specific integrated circuits (ASICs) that execute at least some of the processes, or (3) a combination of the processors and the hardware circuits. The processor includes a CPU and memory such as RAM and ROM. The memory stores program codes or instructions configured to cause the CPU to execute processes. The memory, or a computer readable medium, includes any type of medium that is accessible by a general-purpose computer and a dedicated computer. The PCS controller 15 is configured to control the DC/DC converter 13 and the inverter 14. The first controller is formed of part of the PCS controller 15. A second controller is formed of at least part of the PCS controller 15.

The power system 10 may include a monitor 16 configured to monitor power or the like transmitted to the distribution line L. The monitor 16 also monitors external power supplied to the power system 10 from the distribution line L.

The power system 10 may include a storage battery 17 storing the generation power of the photovoltaic cell 11. The storage battery 17 is connected, for example, between the photovoltaic cell 11 and the PCS 12, between the DC/DC converter 13 and the inverter 14 in the PCS 12, or between the PCS 12 and the monitor 16. The power system 10 may include a storage battery controller controlling the charging of the storage battery 17 and the discharging from the storage battery 17.

The power system 10 may include an additional electric device 18 differing from the electric device 30. The additional electric device 18 is, for example, configured to be powered by alternating-current power. The additional electric device 18 is, for example, supplied with generation power of the photovoltaic cell 11 at the downstream side of the PCS 12. The additional electric device 18 may be configured to be powered by direct-current power. The additional electric device 18 may be, for example, supplied with generation power of the photovoltaic cell 11 between the DC/DC converter 13 and the inverter 14 in the PCS 12. The number of additional electric devices 18 may be one or more. The additional electric device 18 may be configured to be removable from the power system 10.

Maximum Power Point Tracking

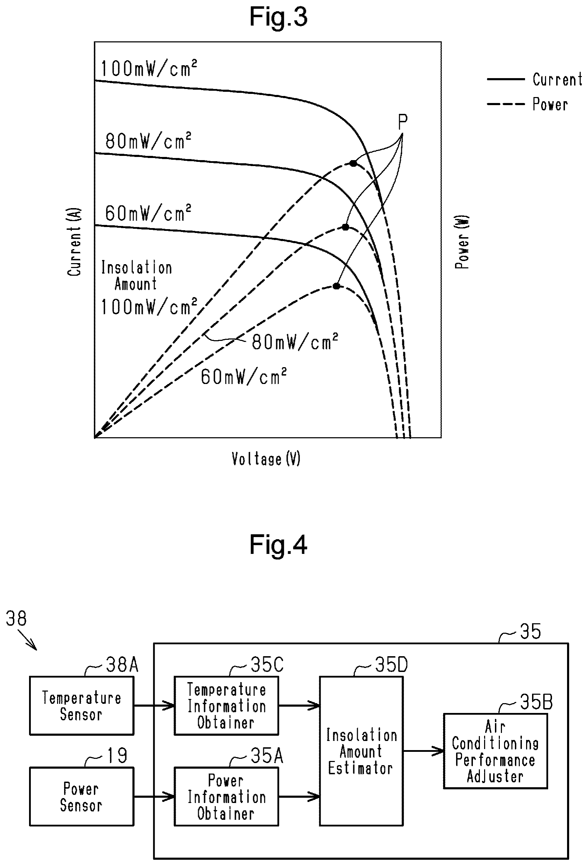

As shown in Fig. 3, the output power of the photovoltaic cell 11 has a maximum power point P that varies in accordance with an insolation amount. Fig. 3 shows characteristics of the photovoltaic cell 11 at room temperature. The room temperature is preferably 25 degrees. The PCS controller 15 shown in Fig. 2 is configured to execute maximum power point tracking (MPPT). In the maximum power point tracking, the PCS controller 15 controls the DC/DC converter 13 to obtain an output voltage that maximizes output power of the photovoltaic cell 11. For example, when the PCS controller 15 controls the DC/DC converter 13 to increase the output voltage of the photovoltaic cell 11, if power transmitting through the DC/DC converter 13 is increased, the PCS controller 15 controls the DC/DC converter 13 to further increase the output voltage of the photovoltaic cell 11. When the PCS controller 15 controls the DC/DC converter 13 to increase the output voltage of the photovoltaic cell 11, if power transmitting through the DC/DC converter 13 is decreased, the PCS controller 15 controls the DC/DC converter 13 to decrease the output voltage of the photovoltaic cell 11. When the PCS controller 15 controls the DC/DC converter 13 to decrease the output voltage of the photovoltaic cell 11, if power transmitting through the DC/DC converter 13 is increased, the PCS controller 15 controls the DC/DC converter 13 to further decrease the output voltage of the photovoltaic cell 11. When the PCS controller 15 controls the DC/DC converter 13 to decrease the output voltage of the photovoltaic cell 11, if power transmitting through the DC/DC converter 13 is decreased, the PCS controller 15 controls the DC/DC converter 13 to increase the output voltage of the photovoltaic cell 11. Thus, when the DC/DC converter 13 controls the output voltage of the photovoltaic cell 11, the output power of the photovoltaic cell 11 reaches the maximum power point P.

Instead of or in addition to controlling the DC/DC converter 13, the PCS controller 15 may control the inverter 14 to execute the maximum power point tracking. For example, when the PCS controller 15 controls at least one of the output voltage of the DC/DC converter 13 and the output current of the inverter 14 to increase the output current of the photovoltaic cell 11, if power transmitting through the inverter 14 is increased, the PCS controller 15 controls at least one of the DC/DC converter 13 and the inverter 14 to further increase the output current of the photovoltaic cell 11. When the PCS controller 15 controls the output voltage of the DC/DC converter 13 and the output current of the inverter 14 to increase the output current of the photovoltaic cell 11, if power transmitting through the inverter 14 is decreased, the PCS controller 15 controls at least one of the DC/DC converter 13 and the inverter 14 to decrease the output current of the photovoltaic cell 11. In this specification, "at least one of A and B" should be understood to mean "only A, only B, or both A and B."

Electric Device

The electric device 30 is configured to be powered by direct-current power or alternating-current power supplied from a power converter. The power converter is configured to convert generation power of the photovoltaic cell 11 into direct-current power or alternating-current power. The electric device 30 is powered by receiving a portion of first direct-current power supplied from the power converter. The DC/DC converter 13 converts the voltage of direct-current power, and the direct-current power is supplied to the electric device 30. The electric device 30 is supplied with the first direct-current power, which is the generation power of the photovoltaic cell 11, from a point between the DC/DC converter 13 and the inverter 14. Of the generation power of the photovoltaic cell 11, the portion that is not supplied to the electric device 30 is supplied to at least one of the additional electric device 18, the storage battery 17, and the distribution line L.

When generation power of the photovoltaic cell 11 is greater than or equal to consumption power of the electric device 30, the electric device 30 may be powered by using the generation power of the photovoltaic cell 11. When the generation power of the photovoltaic cell 11 is less than consumption power of the electric device 30, the electric device 30 may be powered by using power from another power source. An example of another power source is an alternating-current power source supplied from the distribution line L. The electric device 30 may be configured to be powered by using power obtained by adding the generation power of the photovoltaic cell 11 and another power source.

The electric device 30 is, for example, a heat pump device 31 including a heat pump. For example, the heat pump device 31 is an air conditioner 32 adjusting the temperature of a room in the building H on which the photovoltaic cell 11 is installed. The power converter is configured to convert generation power of the photovoltaic cell 11 into direct-current power or alternating-current power so that the direct-current power or the alternating-current power is supplied to the electric device 30. In the present embodiment, the electric device 30 is powered by receiving direct-current power converted from the generation power of the photovoltaic cell 11.

The electric device 30 includes a power consumption unit 33. The power consumption unit 33 includes, for example, a motor 33A configured to drive the heat pump device 31. The electric device 30 includes an inverter 34. The inverter 34 converts power supplied from the power converter into alternating-current power having a predetermined voltage amplitude and a predetermined frequency, and then the power is supplied to the power consumption unit 33.

The electric device 30 includes a controller 35. The controller 35 includes, for example, a microcomputer and memory storing a program operating the microcomputer. The controller 35 may be configured as circuitry including (1) one or more processors that execute various processes according to computer programs (software), (2) one or more dedicated hardware circuits such as application-specific integrated circuits (ASICs) that execute at least some of the processes, or (3) a combination of the processors and the hardware circuits. The processor includes a CPU and memory such as RAM and ROM. The memory stores program codes or instructions configured to cause the CPU to execute processes. The memory, or a computer readable medium, includes any type of medium that is accessible by a general-purpose computer and a dedicated computer. The controller 35 is, for example, configured to control the inverter 34.

Power Detection Means

The electric device 30 includes a power detection means 36 directly detecting generation power of the photovoltaic cell 11, direct-current power converted from generation power of the photovoltaic cell 11, or alternating-current power converted from generation power of the photovoltaic cell 11. The direct-current power converted from the generation power of the photovoltaic cell 11 or the alternating-current power converted from the generation power of the photovoltaic cell 11 detected by the power detection means 36 is substantially equal to the generation power of the photovoltaic cell 11 or is a value that allows for estimation of the generation power of the photovoltaic cell 11 with high accuracy. In other words, the power detection means 36 is configured to directly detect the generation power of the photovoltaic cell 11 or power that is substantially equal to the generation power of the photovoltaic cell 11.

The power detection means 36 is, for example, directly connected to the controller 35 of the electric device 30 by a signal line 20 and a power sensor 19 arranged in a power supply path of the photovoltaic cell 11. The power detection means 36 is, for example, directly connected to a substrate on which a microcomputer of the controller 35 of the electric device 30 is mounted by the signal line 20 and the power sensor 19 arranged in the power supply path of the photovoltaic cell 11. The power detection means 36 is, for example, connected to a microcomputer of the controller 35 of the electric device 30 by the signal line 20 and the power sensor 19 arranged in the power supply path of the photovoltaic cell 11 directly or via an A/D conversion circuit. The power detection means 36 is, for example, connected to the controller 35 of the electric device 30 without using a controller other than the electric device 30. The controller other than the electric device 30 is, for example, configured to operate a microcomputer differing from the microcomputer of the controller 35 of the electric device 30 to calculate a detection signal of the power detection means 36 and output the result of the calculation. The power detection means 36 includes, for example, a current detection means 36A and a voltage detection means 36B. The current detection means 36A is, for example, directly connected to the controller 35 of the electric device 30 by a current signal line 20A and a current sensor 19A arranged in the power supply path of the photovoltaic cell 11 The voltage detection means 36B is, for example, directly connected to the controller 35 of the electric device 30 by the voltage signal line 20B and a voltage sensor 19B arranged in the power supply path of the photovoltaic cell 11.

The current detection means 36A is arranged in the power supply path between the photovoltaic cell 11 and the distribution line L to detect a current in the power supply path that is supplied with power substantially equal to the generation power of the photovoltaic cell 11. In other words, the current detection means 36A is arranged in the power supply path between the photovoltaic cell 11 and the distribution line L to detect a current in the power supply path extending from the photovoltaic cell 11 to a connection point that is connected to electric devices such as the power source other than the photovoltaic cell 11, the electric device 30, and the additional electric device 18. An electric device may be disregarded when consumption power of the electric device is substantially small as compared to the generation power of the photovoltaic cell 11. Consumption power that is substantially small as compared to the generation power of the photovoltaic cell 11 is, for example, less than or equal to 1% of the generation power of the photovoltaic cell 11. The voltage detection means 36B is, for example, arranged in the power supply path of the photovoltaic cell 11 to detect a voltage substantially equal to that at which the current detection means 36A is arranged.

The electric device 30 includes a signal receiver 37 receiving a detection signal of generation power of the photovoltaic cell 11, direct-current power converted from generation power of the photovoltaic cell 11, or alternating-current power converted from generation power of the photovoltaic cell 11. The signal receiver 37 is, for example, provided in the controller 35. The signal receiver 37 is, for example, provided on a circuit substrate including the controller 35. The signal receiver 37 includes, for example, a current signal receiver 37A and a voltage signal receiver 37B. The current detection means 36A includes the current signal receiver 37A. The voltage detection means 36B includes the voltage signal receiver 37B.

Power Sensor

The power system 10 includes the power sensor 19 and the signal line 20, which connects the power sensor 19 and the electric device 30. The signal line 20 transmits a detection signal of the power sensor 19 to the electric device 30. The power sensor 19 is arranged between the photovoltaic cell 11 and the power converter, arranged in the power converter, or arranged downstream of the power converter with respect to power supply. The power sensor 19 includes, for example, the current sensor 19A and the voltage sensor 19B.

The current sensor 19A detects current in the power supply path of the photovoltaic cell 11 between the DC/DC converter 13 and the inverter 14. The current sensor 19A detects, for example, a current of power that is output from the DC/DC converter 13. The current sensor 19A is, for example, arranged in a power line that connects the DC/DC converter 13 and the inverter 14. In an example, the current sensor 19A detects an analog signal, and the analog signal is input to the current signal receiver 37A.

The voltage sensor 19B detects voltage in the power supply path of the photovoltaic cell 11 between the DC/DC converter 13 and the inverter 14. The voltage sensor 19B detects, for example, a voltage of power that is input to the inverter 34 in the electric device 30. In an example, the voltage sensor 19B detects an analog signal, and the analog signal is input to the voltage signal receiver 37B.

Power Information Obtainer

As shown in Fig. 4, the controller 35 includes a power information obtainer 35A. In an example, the power information obtainer 35A calculates the current of generation power of the photovoltaic cell 11 based on an analog signal transmitted from the current sensor 19A, and calculates the voltage of generation power of the photovoltaic cell 11 based on an analog signal transmitted from the voltage sensor 19B. The controller 35 calculates generation power of the photovoltaic cell 11 from the calculated current of generation power of the photovoltaic cell 11 and the calculated voltage of generation power of the photovoltaic cell 11.

The controller 35 is configured to control consumption power of the electric device 30 based on the detected generation power of the photovoltaic cell 11. The controller 35, for example, adjusts a variation amount of consumption power or air conditioning performance in accordance with the insolation amount based on the detected generation power of the photovoltaic cell 11. It is preferred that the controller 35 be configured to adjust only one of the variation amount of consumption power and the air conditioning performance in accordance with the insolation amount.

Adjustment of Variation Amount of Consumption Power

Each electric device 30 adjusts the variation amount of consumption power of the electric device 30 based on variations in generation power of the photovoltaic cell 11. The electric device 30 adjusts consumption power of the electric device 30 so as to decrease the difference between the variation amount of generation power of the photovoltaic cell 11 and the variation amount of consumption power of the electric device 30. The controller 35 decreases consumption power of the electric device 30, for example, when the generation power of the photovoltaic cell 11 is decreased. The controller 35 increases consumption power of the electric device 30, for example, when the generation power of the photovoltaic cell 11 is increased. The controller 35, for example, adjusts consumption power of the electric device 30 so as to decrease variations in power supplied to a device other than the electric device 30 in the supply path of power generated by the photovoltaic cell 11. The power supplied to a device other than the electric device 30 is, for example, supplied to at least one of the additional electric device 18, the storage battery 17, and the distribution line L.

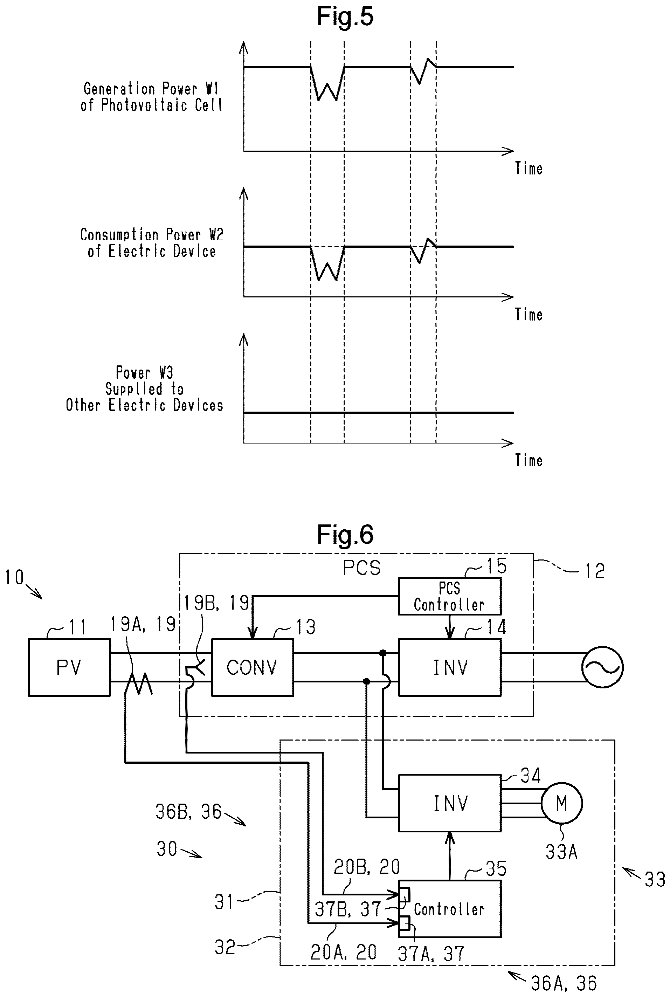

As shown in Fig. 5, the controller 35 adjusts consumption power of the electric device 30 so that changes in the consumption power of the electric device 30 conform to changes in the generation power of the photovoltaic cell 11 in accordance with time, thereby controlling the consumption power of the electric device 30. The controller 35 may perform feedback control or feedforward control so that the consumption power of the electric device 30 changes in accordance with changes in the generation power of the photovoltaic cell 11. The consumption power of the electric device 30 may be adjusted, for example, by changing the air conditioning performance of the air conditioner 32. The consumption power of the electric device 30 may be adjusted, for example, by changing power supplied to the power consumption unit 33. The consumption power of the electric device 30 may be adjusted, for example, by changing torque or rotation speed of the motor 33A.

The controller 35 adjusts consumption power of the electric device 30 device so that "Variation Amount in Generation Power W1 of Photovoltaic Cell 11" < "Variation Amount in 'Generation Power W1 of Photovoltaic Cell 11' + Variation Amount in 'Consumption Power W2 of Electric Device 30'." The controller 35, for example, controls consumption power of the electric device 30 so that the variation amount in generation power W3 supplied to a device other than the electric device 30 during a first period is less than or equal to a first variation amount. The power W3 supplied to a device other than the electric device 30 has a value obtained by subtracting the consumption power W2 of the electric device 30 from the generation power W1 of the photovoltaic cell 11. It is preferred that the first variation amount be set to have a value smaller than a second variation amount of the generation power W1 of the photovoltaic cell 11 during the first period. The first variation amount may be zero.

The controller 35 may adjust the consumption power W2 of the electric device 30 to satisfy the relationship "W1 - W2 > W3." In this case, W3 may have a fixed value or may vary in accordance with average generation power of the photovoltaic cell 11 in a predetermined time. Additionally, W3 may have a value that is set in accordance with time, season, or weather.

Adjustment of Air Conditioning Performance in accordance with Insolation Amount

The air conditioner 32 adjusts the air conditioning performance based on the insolation amount. The controller 35 includes, for example, an air conditioning performance adjuster 35B that adjusts the air conditioning performance based on the insolation amount. When the insolation amount is large, the indoor temperature is likely to increase. When the insolation amount is small, the indoor temperature is less likely to increase. The air conditioning performance adjuster 35B, for example, controls the air conditioning performance based on the insolation amount so that the indoor temperature is in a range in which a user feels comfortable.

When the PCS controller 15 shown in Fig. 2 is executing maximum power point tracking, the insolation amount may be estimated from generation power of the photovoltaic cell 11 based on the characteristics of the photovoltaic cell 11 shown in Fig. 3. The maximum power point P shown in Fig. 3 changes depending on the operation temperature of the photovoltaic cell 11. Thus, the insolation amount is estimated more accurately by using the operation temperature of the photovoltaic cell 11. The air conditioner 32 includes a temperature detection means 38 detecting a temperature outside the building H. The temperature detection means 38 includes a temperature sensor 38A, for example, arranged on an outdoor unit of the air conditioner 32. The controller 35 includes a temperature information obtainer 35C receiving a detection result of the temperature sensor 38A. The temperature information obtainer 35C calculates an outdoor temperature based on the detection signal of the temperature sensor 38A. The outdoor temperature detected by the temperature sensor 38A may be used as the operation temperature of the photovoltaic cell 11.

The air conditioner 32 includes an insolation estimator 35D estimating the insolation amount based on the detection value of the power detection means 36 and a detection value of the temperature detection means 38. The insolation estimator 35D is, for example, arranged on the controller 35. The air conditioner 32 adjusts the air conditioning performance of the air conditioner 32 in accordance with the output of the insolation estimator 35D. The controller 35 adjusts the air conditioning performance of the air conditioner 32 based on the insolation amount estimated by the insolation estimator 35D.

In the present embodiment, the air conditioner 32 adjusts the air conditioning performance based on the insolation amount that is estimated from the detection value of the power detection means 36 and the detection value of the temperature detection means 38. Alternatively, the air conditioner 32 may adjust the air conditioning performance based on the detection value of the power detection means 36 and the detection value of the temperature detection means 38 without estimating the insolation amount.

The insolation estimator 35D estimates the insolation amount using the equation (Equation 1) shown in Mathematical Expression 1. In Equation 1, the operation temperature of the photovoltaic cell 11 may be replaced with the outdoor temperature to calculate generation power $P_{stc}$ of the photovoltaic cell at room temperature. The insolation estimator 35D estimates the insolation amount based on $P_{stc}$ calculated from Equation 1 and the graph shown in Fig. 3 showing the characteristics of the photovoltaic cell 11 at room temperature.

[Mathematical Expression 1]

$$P_{stc} = \frac{P}{1 + \alpha(T_{PV} - 25)} \approx \frac{P}{1 + \alpha(T_a - 25)}$$

$P_{stc}$: Generation power of Photovoltaic Cell 11 at Room Temperature [W]
P: Generation power of Photovoltaic Cell 11 [W]
$\alpha$: Temperature Coefficient [1/°C]
$T_{PV}$: Operation Temperature of Photovoltaic Cell 11 [°C]
$T_\alpha$: Outdoor Temperature [°C]

Generation power of the photovoltaic cell 11 is substantially proportional to the insolation amount. Thus, in the insolation estimator 35D, the insolation amount may be estimated using the equation (Equation 1) shown in Mathematical Expression 2. In Equation 2, $T_\alpha + \beta \times P$ may be replaced with the operation temperature $T_{PV}$ of the photovoltaic cell 11 to calculate generation power $P_{stc}$ of the photovoltaic cell 11 at room temperature. The insolation estimator 35D estimates the insolation amount based on $P_{stc}$ calculated from Equation 2 and the graph shown in Fig. 3 showing the characteristics of the photovoltaic cell 11 at room temperature. In Equation 2, generation power P of the photovoltaic cell 11 in the denominator may be an average value of output powers of the photovoltaic cell 11 during a predetermined period in consideration of variations in the insolation amount. The predetermined period is, for example, ten minutes, thirty minutes, or one hour.

[Mathematical Expression 2]

$$P_{stc} = \frac{P}{1 + \alpha(T_{PV} - 25)} \approx \frac{P}{1 + \alpha\{(T_a + \beta \times P) - 25\}}$$

$\beta$: Conversion Coefficient [°C/W]

Instead of using Equations 1 and 2, the insolation estimator 35D may estimate the insolation amount using an association table in which the generation power of the photovoltaic cell 11 and the outdoor temperature are associated with generation power $P_{stc}$ of the photovoltaic cell 11 at room temperature. The insolation estimator 35D obtains generation power of the photovoltaic cell 11 at room temperature from the generation power of the photovoltaic cell 11, the outdoor temperature, and the association table, and then estimates the insolation amount based on the obtained generation power of the photovoltaic cell 11 at room temperature and the graph showing the characteristics of the photovoltaic cell 11 at room temperature shown in Fig. 3. The association table may be created based on measurement data measured from tests or the like in advance, or may be created as a model obtained through machine learning.

The insolation estimator 35D may estimate the insolation amount without using the characteristics of the photovoltaic cell 11 at room temperature, that is, without calculating generation power $P_{stc}$ of the photovoltaic cell 11. In this case, the insolation estimator 35D estimates the insolation amount, for example, using $T_{\alpha}+\beta\times P$ as the operation temperature $T_{PV}$ of the photovoltaic cell 11 and based on the operation temperature $T_{PV}$ of the photovoltaic cell 11 and characteristic information of the photovoltaic cell 11 prepared in advance. Alternatively, the insolation estimator 35D may estimate the insolation amount, for example, using the outdoor temperature as the operation temperature $T_{PV}$ of the photovoltaic cell 11 and based on the operation temperature $T_{PV}$ of the photovoltaic cell 11 and characteristic information of the photovoltaic cell 11 prepared in advance.

The operation of the present embodiment will now be described.

When a device other than the electric device 30 such as the PCS controller 15 of the PCS 12 or the monitor 16 generates information related to generation power of the photovoltaic cell 11 and transmits the information to the electric device 30, the electric device 30 does not entirely obtain the detection results. When a device other than the electric device 30 generates information related to generation power of the photovoltaic cell 11 and then transmits the information to the electric device 30, the electric device 30 delays the acquisition of the information. The electric device 30 uses the power detection means 36 to directly detect generation power of the photovoltaic cell 11, direct-current power converted from generation power of the photovoltaic cell 11, or alternating-current power converted from generation power of the photovoltaic cell 11. Thus, the electric device 30 recognizes the generation power of the photovoltaic cell 11 in detail.

The photovoltaic cell 11 is arranged on the roof HR. If the photovoltaic cell 11 is provided with the current sensor 19A and the voltage sensor 19B, the layout of the signal line 20 is complicated, and the maintenance of the signal line 20 is hindered. In the present embodiment, the PCS 12 includes the current sensor 19A, and the electric device 30 includes the voltage sensor 19B. Typically, the PCS 12 is installed on a wall surface of the building H or the like where lines are laid out more easily than on the roof HR. Thus, as compared to when the photovoltaic cell 11 is provided with the current sensor 19A and the voltage sensor 19B, the layout of lines from the controller 35 of the electric device 30 to the current sensor 19A and the voltage sensor 19B is simplified, and the maintenance of the lines is readily performed.

In the power system 10 of the present embodiment, power consuming devices such as the electric device 30 and the additional electric device 18 are not supplied with power from a point between the DC/DC converter 13 and the inverter 14. Thus, the electric device 30 appropriately detects generation power of the photovoltaic cell 11.

The present embodiment has the following effects.

(1) The electric device 30 includes the power detection means 36 directly detecting generation power of the photovoltaic cell 11, direct-current power converted from the generation power of the photovoltaic cell 11, or alternating-current power converted from generation power of the photovoltaic cell 11. Thus, the electric device 30 appropriately recognizes the generation power of the photovoltaic cell 11.

(2) The electric device 30 is powered by receiving direct-current power converted from the generation power of the photovoltaic cell 11. Thus, the electric device 30, which is configured to be powered by direct-current power, recognizes the generation power of the photovoltaic cell 11 in a preferred manner.

(3) The electric device 30 is powered by receiving a portion of the first direct-current power supplied from a power converter. Thus, the electric device 30, which is configured to be powered by a portion of the first direct-current power, recognizes the generation power of the photovoltaic cell 11 in a preferred manner.

(4) The electric device 30 includes the signal receiver 37 receiving a detection signal of generation power of the photovoltaic cell 11, direct-current power converted from generation power of the photovoltaic cell 11, or alternating-current power converted from generation power of the photovoltaic cell 11. Thus, the generation power of the photovoltaic cell 11, the direct-current power converted from generation power of the photovoltaic cell 11, or the alternating-current power converted from generation power of the photovoltaic cell 11 is recognized in a preferred manner.

(5) The electric device 30 adjusts consumption power of the electric device 30 based on variations in generation power of the photovoltaic cell 11. The electric device 30 changes the consumption power of the electric device 30 in accordance with variations in generation power of the photovoltaic cell 11.

(6) The electric device 30 adjusts consumption power of the electric device 30 so as to decrease the difference between the variation amount of generation power of the photovoltaic cell 11 and the variation amount of consumption power of the electric device 30. As described above, since the electric device 30 decreases the difference between generation power of the photovoltaic cell 11 and consumption power of the electric device 30, variations in power supplied to devices other than the electric device 30 arranged in the power path of the photovoltaic cell 11 are decreased. Variations in the amount of power generated by photovoltaics increase variations in power exchanged with a grid, thereby decreasing the stability of the grid. As photovoltaics are widely used, the grid instability is becoming a societal concern. If limitations are imposed on power generation of photovoltaics, generatable power will not be efficiently used. If a capacitor of a power converter is increased in capacitance, the power converter may be enlarged. The electric device 30 adjust consumption power of the electric device 30 device so that "Variation Amount in Generation Power W1 of Photovoltaic Cell 11" < "Variation Amount in 'Generation Power W1 of Photovoltaic Cell 11' + Variation Amount in 'Consumption Power W2 of Electric Device 30'." This avoids the inefficient use of generatable power and the enlargement of the power converter.

(7) The electric device 30 is the heat pump device 31 including a heat pump. Thus, the heat pump device 31 appropriately recognizes generation power of the photovoltaic cell 11.

(8) The heat pump device 31 is the air conditioner 32 adjusting the temperature of a room in the building H on which the photovoltaic cell 11 is installed. The air conditioner 32 includes the temperature detection means 38 detecting the temperature outside the building H. The air conditioner 32 adjusts the air conditioning performance based on a detection value of the power detection means 36 and a detection value of the temperature detection means 38. Therefore, the air conditioner 32 appropriately adjusts the air conditioning performance in accordance with the amount of power generated by photovoltaics and the temperature outside the building H.

(9) The air conditioner 32 includes the insolation estimator 35D estimating the insolation amount based on a detection value of the power detection means 36 and a detection value of the temperature detection means 38. The air conditioner 32 adjusts the air conditioning performance of the air conditioner 32 in accordance with an output of the insolation estimator 35D. Therefore, the air conditioner 32 appropriately adjusts the air conditioning performance of the air conditioner 32 in accordance with the insolation amount.

(10) The power system 10 includes the electric device 30 and a power converter configured to convert generation power of the photovoltaic cell 11 into direct-current power or alternating-current power and supply the direct-current power or the alternating-current power to the electric device 30. Therefore, the power system 10 appropriately recognizes generation power of the photovoltaic cell 11.

(12) The power system 10 includes the power sensor 19 arranged between the photovoltaic cell 11 and the power converter, arranged in the power converter, or arranged downstream of the power converter with respect to power supply. The power system 10 further includes the signal line 20 connecting the power sensor 19 and the electric device 30 to transmit a detection signal of the power sensor 19 to the electric device 30. Therefore, the power system 10 appropriately recognizes generation power of the photovoltaic cell 11 using the power sensor 19 and the signal line 20.

Modified Examples

The electric device and the power system including the electric device according to the present disclosure may be modified as follows in addition to the above embodiment or have a mode in which at least two modified examples are combined as long as the modified examples are consistent with each other.

As shown in Fig. 6, the current sensor 19A may be configured to detect a current in the power supply path of the photovoltaic cell 11 between the photovoltaic cell 11 and the DC/DC converter 13, and the voltage sensor 19B may be configured to detect a voltage in the power supply path of the photovoltaic cell 11 between the photovoltaic cell 11 and the DC/DC converter 13. The current sensor 19A shown in Fig. 6 detects, for example, a current of power that is output from the photovoltaic cell 11. The current sensor 19A shown in Fig. 6 is, for example, arranged in a power line that connects the photovoltaic cell 11 and the DC/DC converter 13. The voltage sensor 19B shown in Fig. 6 detects, for example, a voltage of power that is input into the DC/DC converter 13. The voltage sensor 19B shown in Fig. 6 is, for example, arranged in a power line that connects the photovoltaic cell 11 and the DC/DC converter 13. In the power system 10 shown in Fig. 6, the output of the photovoltaic cell 11 is directly detected at an upstream side of the power converter in the supply path of power generated by the photovoltaic cell 11. Thus, information related to generation power of the photovoltaic cell 11 is not affected by operation of the power converter and thus is detected more quickly and accurately. The power system 10 shown in Fig. 6 may estimate the insolation amount from characteristics of the photovoltaic cell 11 even when the power converter is not executing the maximum power point tracking.

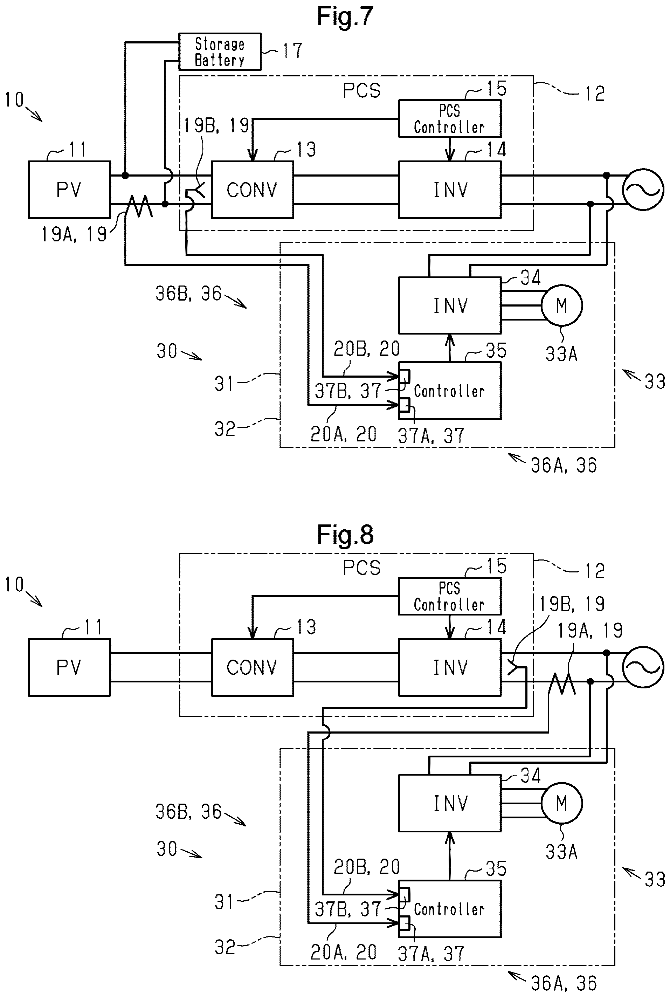

As shown in Fig. 7, when the storage battery 17 is connected between the photovoltaic cell 11 and the power converter, the current sensor 19A may be configured to detect a current in the power supply path of the photovoltaic cell 11 between the photovoltaic cell 11 and the storage battery 17. The voltage sensor 19B is configured to detect a voltage in the power supply path of the photovoltaic cell 11 between the storage battery 17 and the DC/DC converter 13. Alternatively, in Fig. 7, the voltage sensor 19B may be configured to detect a voltage in the power supply path of the photovoltaic cell 11 between the photovoltaic cell 11 and the storage battery 17.

In the modified example shown in Fig. 7, the electric device 30 may be connected between the DC/DC converter 13 and the inverter 14. In this case, the electric device 30 is powered by receiving direct-current power obtained by adding the first direct-current power and the second direct-current power supplied from a direct-current power source, or the storage battery 17. The direct-current power source is not limited to the storage battery 17 as long as the direct-current power source differs from the photovoltaic cell 11. For example, the direct-current power source may correspond to direct-current power obtained by converting alternating-current power of an alternating-current power source supplied from the distribution line L.

As shown in Fig. 8, when the electric device 30 is connected to the power supply path of the photovoltaic cell 11 at the downstream side of the PCS 12, the current sensor 19A may detect a current in the power supply path extending from the photovoltaic cell 11 to the distribution line L between the PCS 12 and the point to which the electric device 30 is connected. The voltage sensor 19B may be configured to detect a voltage between the PCS 12 and the electric device 30. The current sensor 19A shown in Fig. 8 detects, for example, a current of power that is output from the PCS 12. The voltage sensor 19B shown in Fig. 8 detects, for example, a voltage of power that is output from the PCS 12. The electric device 30 shown in Fig. 8 is powered by receiving a portion of the first alternating-current power supplied from the PCS 12 or alternating-current power obtained by adding the first alternating-current power and second alternating-current power supplied from an alternating-current power source.

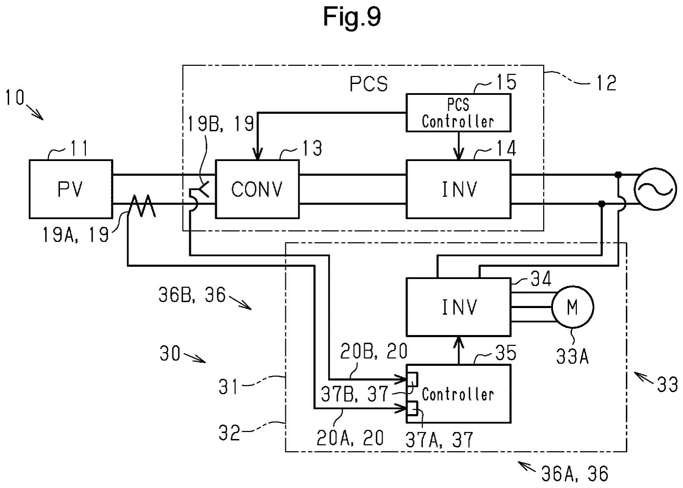

As shown in Fig. 9, when the electric device 30 is connected to the power supply path of the photovoltaic cell 11 at the downstream side of the PCS 12, the current sensor 19A may be configured to detect a current in the power supply path extending from the photovoltaic cell 11 to the distribution line L between the photovoltaic cell 11 and the PCS 12. The voltage sensor 19B may be configured to detect a voltage in the power supply path extending from the photovoltaic cell 11 to the distribution line L between the photovoltaic cell 11 and the PCS 12. The current sensor 19A shown in Fig. 9 detects, for example, a current of power that is output from the photovoltaic cell 11. The current sensor 19A shown in Fig. 9 is, for example, arranged in a power line that connects the photovoltaic cell 11 and the PCS 12. The voltage sensor 19B shown in Fig. 9 detects, for example, a voltage of power that is input into the PCS 12. The voltage sensor 19B shown in Fig. 9 is, for example, arranged in a power line that connects the photovoltaic cell 11 and the PCS 12.

In an example, the current sensor 19A may detect a digital signal, and the digital signal may be input into the current signal receiver 37A. In this case, for example, the current sensor 19A includes a sensor element and an A/D converter configured to convert an analog signal detected by the sensor element into a digital signal. The digital signal obtained by conversion by the A/D converter is directly input into the current signal receiver 37A.

In an example, the voltage sensor 19B may detect a digital signal, and the digital signal may be input into the voltage signal receiver 37B. In this case, for example, the voltage sensor 19B includes a sensor element and an A/D converter configured to convert an analog signal detected by the sensor element into a digital signal. The digital signal obtained by conversion by the A/D converter is directly input into the voltage signal receiver 37B.

When the air conditioner 32 is configured to detect a current in the power supply path of the photovoltaic cell 11 between the photovoltaic cell 11 and the PCS 12 and includes the insolation estimator 35D estimating the insolation amount, the insolation amount may be estimated using equation (Equation 3) shown in Mathematical Expression 3. In Equation 3, $T_\alpha + \gamma \times I_{pv}$ is replaced with the outdoor temperature may be replaced with the operation temperature $T_{PV}$ of the photovoltaic cell 11 to calculate generation power $P_{stc}$ of the photovoltaic cell 11 at room temperature. In this case, the output current $I_{pv}$ of the photovoltaic cell 11 may be an average value of output power of the photovoltaic cell 11 during a predetermined period in consideration of variations in the insolation amount. The predetermined period is, for example, ten minutes, thirty minutes, or one hour.

[Mathematical Expression 3]

$$P_{stc} = \frac{P}{1 + \alpha(T_{PV} - 25)} \approx \frac{P}{1 + \alpha\{(T_\alpha + \gamma \times I_{PV}) - 25\}}$$

$I_{pv}$: Output Current of Photovoltaic Cell 11 [A]
$\gamma$: Conversion Coefficient [°C/A]

While the embodiments of the electric device and the power system including the electric device have been described herein above, it is to be appreciated that various changes in form and detail may be made without departing from the spirit and scope of the electric device and the power system including the electric device.

REFERENCE SIGNS LIST

H) building, 10) power system, 11) photovoltaic cell, 12) PCS (power converter), 19) power sensor, 20) signal line, 30) electric device, 31) heat pump device, 32) air conditioner, 35D) insolation estimator, 36) power detection means 37), signal receiver, 38) temperature detection means

**Claims**

1. An electric device (30) configured to be powered by direct-current power or alternating-current power supplied from a power converter (12, 13), the power converter (12, 13) being configured to convert generation power of a photovoltaic cell (11) into direct-current power or alternating-current power, the electric device (30), comprising:
   a power detection means (36) directly detecting the generation power of the photovoltaic cell (11), or direct-current power or alternating-current power that is converted from the generation power of the photovoltaic cell (11).

2. The electric device (30) according to claim 1, wherein the electric device (30) is powered by receiving direct-current power converted from the generation power of the photovoltaic cell (11).

3. The electric device (30) according to claim 1 or 2, wherein the electric device (30) is powered by receiving a portion of first direct-current power supplied from the power converter (13) or direct-current power obtained by adding the first direct-current power and second direct-current power that is supplied from a direct-current power source.

4. The electric device (30) according to claim 1, wherein the electric device (30) is powered by receiving a portion of first alternating-current power supplied from the power converter (12) or alternating-current power obtained by adding the first alternating-current power and second alternating-current power that is supplied from an alternating-current power source.

5. The electric device (30) according to any one of claims 1 to 4, comprising:
   a signal receiver that receives a detection signal of the generation power of the photovoltaic cell (11) or a detection signal of direct-current power or alternating-current power converted from the generation power of the photovoltaic cell (11).

6. The electric device (30) according to claim 1, wherein the electric device (30) adjusts consumption power of the electric device (30) based on a variation in the generation power of the photovoltaic cell (11).

7. The electric device (30) according to claim 6, wherein the electric device (30) adjusts consumption power of the electric device (30) so as to decrease a difference between a variation amount of the generation power of the photovoltaic cell (11) and a variation amount of the consumption power of the electric device (30).

8. The electric device (30) according to any one of claims 1 to 7, wherein the electric device (30) includes a heat pump device (31) including a heat pump.

9. The electric device (30) according to claim 8, wherein

   the heat pump device includes an air conditioner (32) adjusting a temperature of a room in a building (H) on which the photovoltaic cell (11) is installed,
   the air conditioner (32) includes a temperature detection means (38) detecting a temperature outside the building (H), and
   the air conditioner (32) adjusts an air conditioning performance based on a detection value of the power detection means (36) and a detection value of the temperature detection means (38).

10. The electric device (30) according to claim 9, wherein

    the air conditioner (32) includes an insolation estimator (35D) estimating an insolation amount based on the detection value of the power detection means (36) and the detection value of the temperature detection means (38), and
    the air conditioner (32) adjusts an air conditioning performance of the air conditioner (32) in accordance with an output of the insolation estimator (35D).

11. A power system, comprising:

the electric device (30) according to any one of claims 1 to 10; and
a power converter (12, 13) configured to convert generation power of a photovoltaic cell (11) into direct-current power or alternating-current power and supply the direct-current power or the alternating-current power to the electric device (30).

12. The power system according to claim 11, further comprising:

a power sensor (19) arranged between the photovoltaic cell (11) and the power converter (12, 13), arranged in the power converter (12, 13), or arranged downstream of the power converter (12, 13) with respect to power supply; and
a signal line (20) connecting the power sensor (19) and the electric device (30) and transmitting a detection signal of the power sensor to the electric device (30).

# Fig.1

# Fig.2

## Fig.3

## Fig.4

# Fig.5

Generation Power W1
of Photovoltaic Cell

Time

Consumption Power W2
of Electric Device

Time

Power W3
Supplied to
Other Electric Devices

Time

# Fig.6

# Fig.7

# Fig.8

# Fig.9

## INTERNATIONAL SEARCH REPORT

| International application No. |
| --- |
| **PCT/JP2024/012067** |

### A. CLASSIFICATION OF SUBJECT MATTER

*H02J 3/38*(2006.01)i; *H02J 3/14*(2006.01)i; *H02S 50/00*(2014.01)i
FI: H02J3/38 130; H02J3/14 130; H02S50/00

According to International Patent Classification (IPC) or to both national classification and IPC

### B. FIELDS SEARCHED

Minimum documentation searched (classification system followed by classification symbols)

H02J3/38; H02J3/14; H02S50/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2021/215022 A1 (KEI COMMUNICATION TECH INC.) 28 October 2021 (2021-10-28) paragraphs [0017]-[0041], fig. 1-2 | 1-6, 8, 11-12 |
| Y | | 9 |
| A | | 7, 10 |
| Y | JP 9-042802 A (SANYO ELECTRIC CO., LTD.) 14 February 1997 (1997-02-14) paragraphs [0017]-[0068], fig. 1, 4-6 | 9 |
| A | JP 7-190461 A (SAMSUNG ELECTRONICS CO., LTD.) 28 July 1995 (1995-07-28) paragraphs [0020]-[0045], fig. 1-3 | 1-12 |
| A | JP 2006-353079 A (TOKYO INSTITUTE OF TECHNOLOGY) 28 December 2006 (2006-12-28) paragraphs [0031]-[0036], fig. 1-3 | 1-12 |
| A | JP 2017-118738 A (HITACHI, LTD.) 29 June 2017 (2017-06-29) paragraphs [0012]-[0073], fig. 1-10 | 1-12 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 June 2024** | **11 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/012067**

### C.    DOCUMENTS CONSIDERED TO BE RELEVANT

| Category* | Citation of document, with indication, where appropriate, of the relevant passages | Relevant to claim No. |
|---|---|---|
| A | JP 2005-182255 A (MATSUSHITA ELECTRIC INDUSTRIAL CO., LTD.) 07 July 2005 (2005-07-07)<br>paragraphs [0043]-[0069], fig. 1 | 1-12 |

Form PCT/ISA/210 (second sheet) (July 2022)

## INTERNATIONAL SEARCH REPORT
### Information on patent family members

International application No.

**PCT/JP2024/012067**

| Patent document cited in search report | | | Publication date (day/month/year) | Patent family member(s) | Publication date (day/month/year) |
|---|---|---|---|---|---|
| WO | 2021/215022 | A1 | 28 October 2021 | (Family: none) | |
| JP | 9-042802 | A | 14 February 1997 | (Family: none) | |
| JP | 7-190461 | A | 28 July 1995 | US 5560218 A<br>column 4, line 1 to column 6,<br>line 15, fig. 2-3<br>KR 10-1995-0014766 A | |
| JP | 2006-353079 | A | 28 December 2006 | (Family: none) | |
| JP | 2017-118738 | A | 29 June 2017 | (Family: none) | |
| JP | 2005-182255 | A | 07 July 2005 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018078713 A